# EUROPEAN PATENT SPECIFICATION

(11) **EP 0 426 919 B1**
(45) Date of publication and mention of the grant of the patent: **20.10.1993**
(21) Application number: 89311638.4
(22) Date of filing: 10.11.1989
(51) Int. Cl.: B23K 1/012, F23H 3/04

(54) **Hot gas soldering system**
Heissgasschweisssystem
Système de soudage par gaz chaud

(43) Date of publication of application: 15.05.1991
(73) Proprietor: Fortune, William Samuel, Malibu California 90265 (US)
(72) Inventor: Fortune, William Samuel, Malibu California 90265 (US)
(74) Representative: Hughes, Brian Patrick

(56) References cited:
- EP-A- 0 048 772
- GB-A- 2 154 921

## Description

This invention relates generally to the field of hand held soldering/desoldering tools and, more particularly, to such instruments which utilize a stream of gas to convey heat from its source along at least a portion of the path to the soldering point, the term "hand held" being intended to include robotic or robot-like applications. The term "gas" as used here usually means ambient air, but may include inert or relatively inert gases such, for example, as carbon dioxide or nitrogen or the noble gases or the like as when oxidation, corrosive reactions, or other undesired chemical action is to be minimized.

The advantages of hot gas soldering have become known and understood in recent years. It suffices here to point out that hot gas soldering by a stream of very hot gas with a very small cross section can apply precisely the desired quantity of heat at precisely the desired work point without deleteriously heating other adjoining or contiguous material or objects. In addition, the gas stream presents to the work point a substantially constant temperature heat source - unlike a conventional soldering tip the temperature of which inherently varies somewhat as varying amounts of heat are drawn therefrom and then replenished along a metal conduction path. A related advantage is that the gas may be heated instantly as it flows across, in heat exchange relation, the heat source and is instantly applied to the work point while a conventional soldering tool, exhibiting a significantly greater degree of thermal inertia, requires that heat be conducted through the solid components of the tool until the tip, inherently at some distance from the source, reaches a temperature adequate for working.

It may also be pointed out that by hot gas techniques, a thin-walled, low inertia soldering tip may be heated on its inside by an internally directed stream of hot gas providing most of the above advantages. In addition, although the soldering action is more like conventional soldering, the tip may be very desirably of iron composition since copper is not needed for its high thermal conductivity. Thusly avoided are the weight and expense of copper and its plating as well as its high vulnerability to decay by chemical reactions aggravated by its intense thermal environment.

These and other advantages of hot gas soldering have not been achieved in the prior art because of the difficulty of generating the gas stream, satisfactorily heating it, and providing means for shaping it and directing it upon the work point.

It is accordingly an object of the present invention to provide an improved hot gas soldering system.

EP-A-0048772 discloses a hot gas soldering instrument in which gas makes a single pass over a heating element from the handle to the tip of the instrument. GB-A-2154921 discloses a device which uses hot air to attach modular components to or remove them from a printed circuit board.

### SUMMARY OF THE INVENTION

The present invention is hot gas soldering apparatus comprising a base housing body; electric power supply means carried therein for energizing a soldering gas heater; electronically remote control temperature control circuit carried by said housing body; gas supply flow control means carried by said housing body; soldering tool holding means carried by said housing body; a hot gas soldering tool having a handle portion, an electric heating element carried by said handle portion and coupled to said electric power supply and said temperature control circuit; gas heating means connected to said heating element for transferring heat from said heating element to said gas, and soldering gas jet forming means coupled to said gas heating means for causing the heated gas to impinge upon and heat a predetermined soldering point, and combination hose and electric conductors means connecting said housing body and said handle portion, the conductors being disposed within said hose, and said hose also constituting a carrier of said gas from said housing body to said hot gas soldering tool, characterised in that said hot gas soldering tool further includes a hollow metal tubular sheath carried by said handle portion and extending forwardly therefrom, a hollow ceramic cylindrical heating element support tube upon the outer surface of the forward end of which is disposed said electric heating element, said heating element support tube being carried within and radially spaced from said metal tubular sheath to form a first heating chamber component of said gas heating means, an inner gas circulator tube carried by the forward end of said metal tubular sheath and extending rearwardly therefrom for approximately the length of said electric heating element and being disposed within and radially spaced from said hollow ceramic support tube to form thereby a second heating chamber component of said gas heating means, and gas flow means connecting to the interior of said handle portion for carrying gas from said combination hose means, through the interior of said handle portion, forwardly along the length of said first heating chamber, radially inwardly over the forward end of said ceramic heating element support tube, rearwardly along the length of said second heating chamber, radially inwardly over the rear end of said circulator tube, and forwardly toward a soldering work point.

### DESCRIPTIVE LISTING OF DRAWING FIGURES

Embodiments of the present invention will now be described, by way of example, with reference to the accompanying drawings, in which
- FIGURE 1: is a perspective view of an example of a hot gas soldering system constructed in accordance with the present invention;
- FIGURE 2: is a partially exploded perspective view of the base unit thereof;
- FIGURE 3: is rear elevational view of the base unit;
- FIGURE 4: is a view, partially in longitudinal section, of the handle and supply cord thereof;
- FIGURE 5: is a longitudinal sectional view of the soldering tip end thereof;
- FIGURE 6: is a longitudinal sectional view of portions of the handle and heater thereof with an alternate soldering tip;
- FIGURE 7: is a cross sectional view of the structure shown in FIGURE 6 taken along the reference lines 7-7 thereof;
- FIGURE 8: is a cross sectional view of the structure shown in FIGURE 6 taken along the reference lines 8-8 thereof;
- FIGURE 9: is a cross sectional view of the structure shown in FIGURE 6 taken along the reference lines 9-9 thereof;
- FIGURE 10: is a cross sectional view of the structure shown in FIGURE 6 taken along the reference lines 10-10 thereof;
- FIGURE 11: is a cross sectional view of the structure shown in FIGURE 6 taken along the reference lines 11-11 thereof;
- FIGURE 12: is an exploded, perspective view of a portion of the apparatus shown in FIGURE 5.
- FIGURE 13: is a similar view of two alternative tip arrangements of the invention.
- FIGURES 14, 15 and 16: are similar views of further alternative tip arrangements all in accordance with the present invention; and
- FIGURE 17: is a view like FIGURE 1 illustrating additional and alternative features of the invention.

### DETAILED DESCRIPTION OF PREFERRED EMBODIMENT

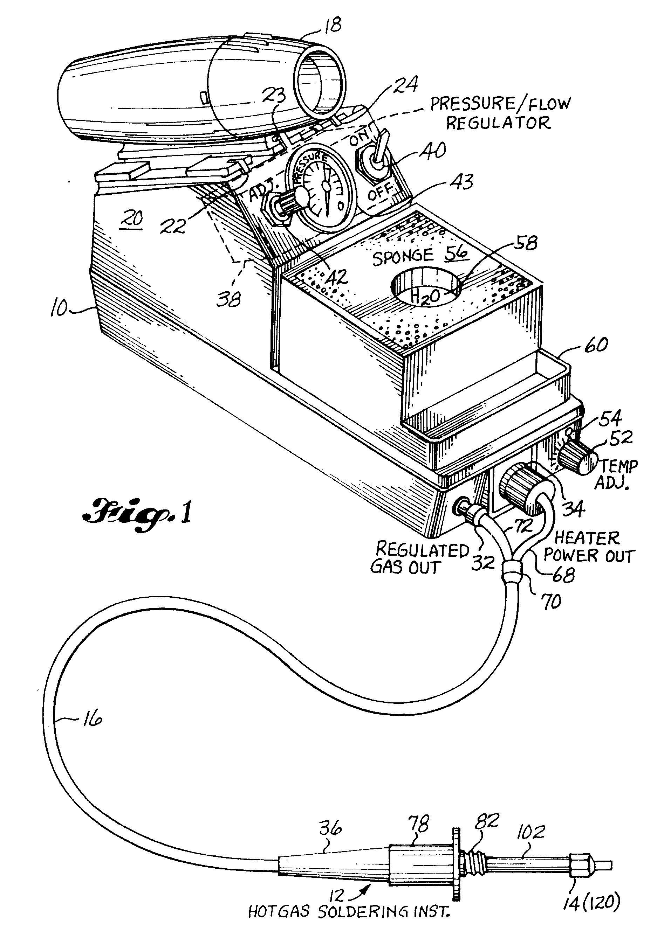

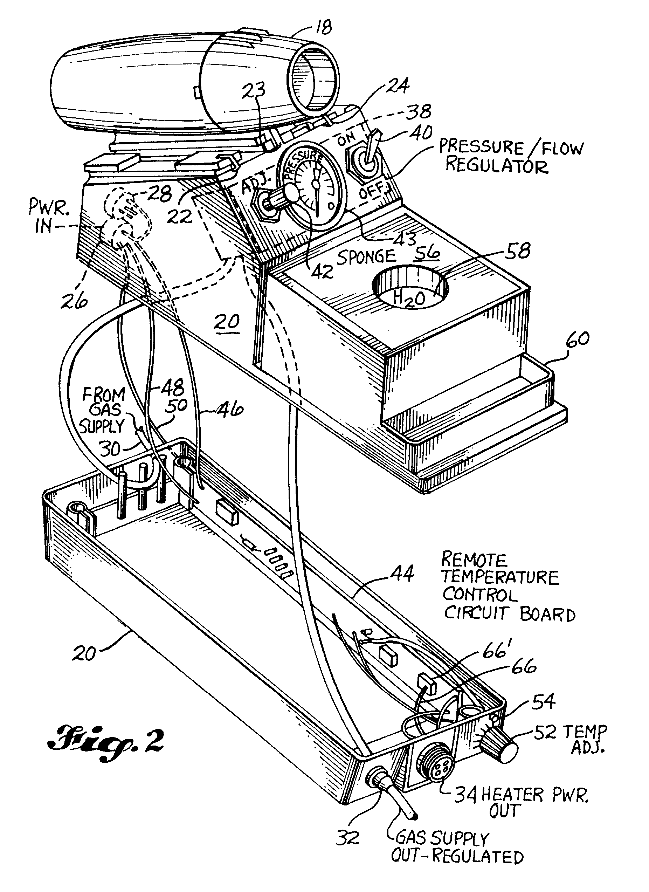

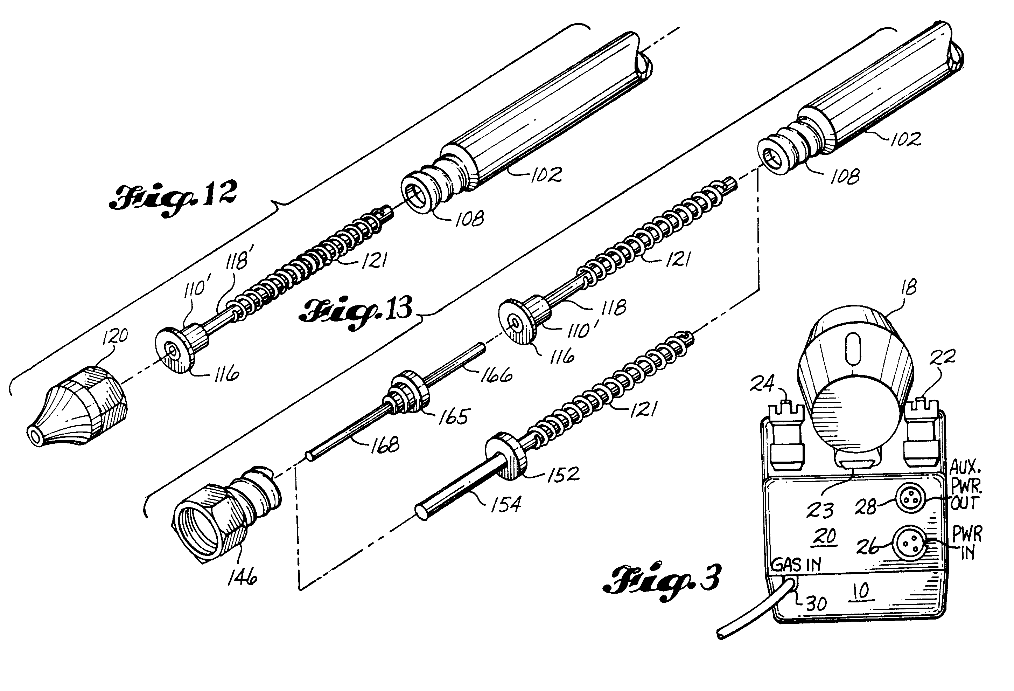

The example of the invention illustrated in FIGURES 1, 2, and 3 includes a base unit 10, a hand held soldering instrument 12 having a hot gas tip 14, and an interconnecting supply line 16 for carrying electrical leads and gas to the instrument 12. A removeable insulated and protective holder 18 for the instrument 12 is shown attached to the base housing 20 by the central one of three mating slip-on brackets 22, 23, 24. Alternatively, a pair, not shown, of instruments may be held by the base housing by utilizing a pair of holders 18 and the two outside brackets 22, 24.

The housing 20 also carries an electrical power inlet terminal 26, an auxilliary parallel power outlet terminal 28, a gas supply inlet terminal 30 which may be connected to an air compressor, not shown, or other source of pressurized gas, a gas supply outlet terminal 32, and an electrical outlet terminal 34, the latter two terminals being connected, as shown in FIGURE 1 to the common cord/hose tube of the supply line 16 which in turn is connected to the handle 36 of the soldering instrument 12.

Contained within the housing 20 is a pressure regulator unit 38 for controlling the flow of gas to the soldering instrument 12. The unit 38 includes an on-off valve 40, a regulator control 42, and an output pressure meter 43.

An electronic circuit board 44 receives power from an external source via terminal 26 and a pair of internal leads 46, 48. An associated ground lead 50 connects the terminal 26, the circuit board 44, the output terminal 34, and, ultimately, the exposed metal portions of the soldering instrument 12 to the ground of the external electric power source. The reference numeral 50 or 50′ is used consistently throughout this description to indicate a lead connecting between articles grounded or to be grounded.

The electronic circuit of the board 44 is, in this example, of the character to control remotely the temperature of the heating element of the soldering instrument 12 by using for a very short portion of the period of each cycle, including an inflection point, of the applied alternating current to effect a resistance measurement of the electrical heating element, the magnitude of that electrical resistance being a function of its temperature. A signal representative of the instantaneous value of the resistance is generated which is used in a feedback sense to control the current flow to the heating element to cause it to maintain a predetermined desired temperature. Thusly, without a separate sensor in the soldering tip and without separate leads being used for a temperature feedback signal, essentially full wave power is continuously impressed on the heater. This technique and its application as herein is described in U.S. Patent No. 4,507,546 issued March 26, 1985, and U.S. Patent No. 4,734,559 issued March 29, 1988, both to William S. Fortune and Wayne A. Murray. A single control 52 is used for on-off and soldering tip temperature setting. A pilot lamp 54 is shown for indicating when the circuit is energized and when power is actually being supplied to the heater element, the different "on" modes being distinguished, for example, by a constant versus an alternating illumination of the lamp 54.

To complete the description of the base unit 10 and housing 20, it may be noted that a tip cleaning sponge 56 moistened by a water, or other cleaning fluid, reservoir 58 is shown at its forward end. A small tool tray 60 may be provided, as shown, for holding items such as extra tips, a tip wrench, or the like. The base unit is molded of a relatively high density, impact resistant plastic and is preferably carbon loaded or otherwise made adequately conductive to preclude any build-up of static charge.

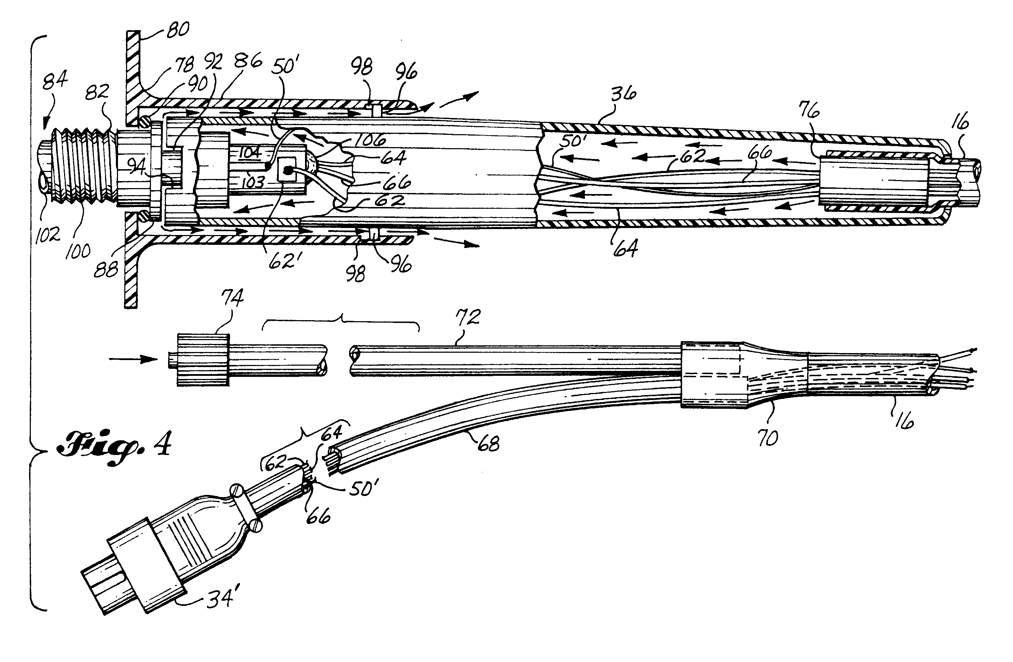

Referring to FIGURE 4, the composite supply line 16 is shown to include a cable connector 34′ for mating with the housing terminal 34 and carrying four leads: two power leads 62, 64, a fibre optic lead 66, and a bare ground wire 50′ along a connector cord 68 to a Y junction fitting 70 with a gas supply tube 72 for connection by a coupler 74 to the gas outlet terminal 32. The cord 68 is blocked with respect to passage of any of the gas therethrough. The fitting 70 couples the gas supply tube 72 to the composite supply line 16 whereby gas from the regulator unit 38 is carried through the hollow interior of the line 16 to the interior of the handle 36 of the soldering instrument 12. An enlarged diameter retainer bushing 76 is forced within the end of the line 16 inside the handle 36 to lock the tube to the soldering instrument. The four leads, electrical and optic are also carried within the line 16 which may readily be of the character to be appropriately insulative, flexible, and mechanically protective of the leads. In addition, the material of the line 16 may be sufficiently loaded or coated to prevent static charge build-up.

It is important to note two effects within the supply 16 as the gas flows therethrough: 1) static electricity which may otherwise accumulate because of the gas flow over the dieletric materials therein and cause a high and deleterious potential is effectively conducted away by the bare ground lead 50′; and 2) the supply is somewhat preheated by its flow over the current carrying leads 62, 64 which are warmed due to their inherent I²R losses.

Surrounding the forward portion of the handle 36 is disposed a finger guard 78 which includes a large diameter forward flange portion 80 having a central opening through which the base end plug body 82 of the heater assembly 84 passes. A skirt portion 86 formed integrally and concentrically with the flange portion 80 extends rearwardly therefrom over the forward portion of the handle 36. An annular gap is provided between the skirt portion and the handle's outer surface to insulate the finger guard and to provide further cooling for operator comfort by the forced flow therethrough of the pressurized gas from the plenum of the interior of the handle 36. The actual flow path is shown in detail in subsequent figures.

The plug body 82 has an enlarged diameter retaining shoulder 88 disposed within the finger guard; and an elastameric o-ring 90 is shown disposed compressively between the rear of the flange portion 80 and the retaining shoulder 88. The plug body 82 behind the retaining shoulder 88 is disposed within the forward end of the handle 36 except for a pair of rotation resisting, mating tabs 92 and notches 94 on these respective elements. The assembly is held together by a diametrically opposed pair of locking tabs 96 molded on the exterior of the handle 36 and a matching set of slots 98 formed on the inner surface of the skirt portion 86. With the sets of tabs 92 and notches 94 in line, the handle 36 is pushed forwardly against the rear of the retaining shoulder 88 which in turn compresses the o-ring 90 against the flange 80 until the tabs 96 pop into their respective slots 98. The assembly may be taken apart by pressing the plastic, deformable skirt portion 86 radially inwardly at a pair of diametrically opposed points thereon disposed angularly 90° from the slots 98.

Other elements of the heater assembly 84 illustrated in FIGURE 4 are the utility threads 100 for affixing special tips and accessories to the instrument, a portion of its metal sheath 102 with its grounding lug 103, the rear end of the ceramic heater cylinder 104 with one of its electric terminals 62′, 64′, and some silastic potting material 106 to plug the end of the cylinder against airflow therethrough and to retain the fiber optic lead 66.

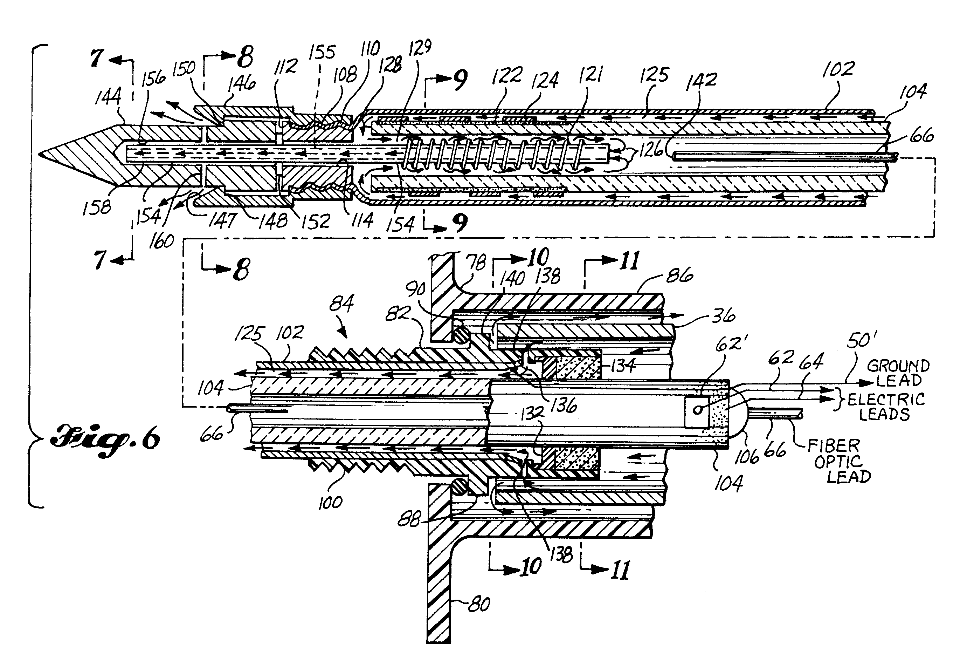

Referring to FIGURE 5, the forward end of the heater assembly of this example of the invention is shown to include the metal sheath 102 terminated at its forward end by a reduced diameter portion formed with pressed threads 108 manifest on both its inner and outer surfaces. A retainer bushing 110 is threaded into the inner of the threads 108 until its forward larger diameter portion 112 is tight against the end of the metal sheath 102. A central bore 114 retains the forward enlarged diameter end 116 of a gas circulator tube 118. A threaded nozzle tip 120, as an example of the tip 14 shown in FIGURE 1, is shown screwed onto the outer of the threads 108 to retain the flanged tube 118 tightly against and within the retainer bushing 110.

Most of the length of the circulator tube 118 is wrapped with a heat exchange enhancing filamentary element in the form of a metallic spring 121 wound snugly about its outer surface. This portion of the circulator tube is disposed within the forward end of the ceramic heater tube 104 axially contiguously to the actual heating element 122 which is deposited on the ceramic tube 104 then glazed over with a very thin glass or ceramic insulative coating and may be of the type obtained from, for example, Kyocera in Kyoto, Japan, Model No. F1495.

Wrapped around the ceramic heater tube 104 contiguously to the heating element 122 is a second heat exchange enhancing filamentary element in the form of a metal tape 124 wound snugly over the outer surface of the ceramic cylinder.

The metallic sheath 102 surrounds the ceramic tube and is spaced therefrom to form a cylindrical annular heating chamber 125 and path for the soldering gas. As indicated by the gas flow arrows 126, gas from the handle plenum, as described below, is fed along the annular chamber 125 over the wound tape 124 for enhanced heat pick-up, thence around the end 128 of the ceramic cube 104, cack along the inner annular chamber 129 over the spring like element 121 for more turbulence and heat pick-up from the ceramic heater tube, then forwardly again through the interior of the collector tube 118, and finally forwardly out through the bore 130 of the nozzle tip 120.

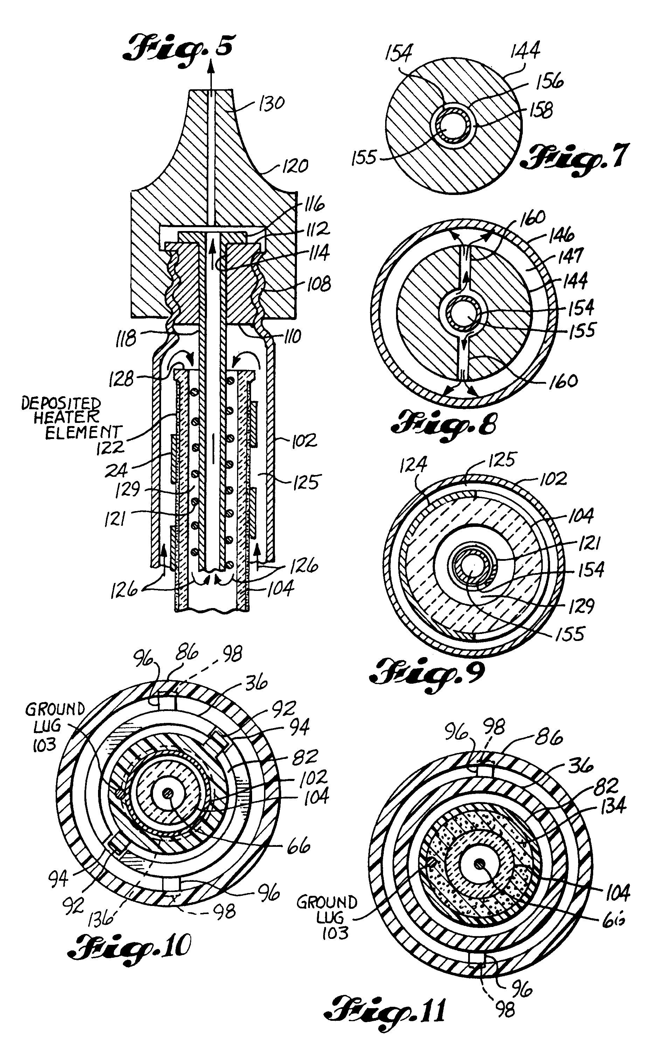

Referring to FIGURE 6, a more detailed view of the interior of the handle 36 and heater assembly 84 is shown with, however, an alternative tip arrangement. The full length of the ceramic heater tube 104 is shown, with one of its electric terminals 62′, and silastic material plug 106 at its rear, base end. The fibre optic and electric leads 66, 62, 64 are shown schematically, along with the ground lead 50′, extending rearwardly from the ceramic tube. An annual spacer ring 132 centers the ceramic tube 104 within the plug body 82 and a second quantity of silastic material forms a retaining plug 134 to seal the ceramic tube 104 to the plug body 82. The metal sheath 102 is press fitted into the forward portion of the plug body and is securely retained therein by its flared end 136. Gas flow communication between the annular space 125 and the plenum interior of the handle 36 is provided by radially extending bores 138 in the wall of the plug body 82. Gas flow between the plenum and the annular space between the skirt portion 86 of the finger guard 78 and the outer surface of the handle 36 is provided by the axial annular gap 140 between the retaining shoulder 88 of the plug body 82 and the forward end of the handle 36 which is maintained by the contact of the extra length of locking tab 92 in the shorter notch 94 of the handle 36 (see FIGURE 4).

The fibre optic lead 66 which extends from, in this example, a light source 66′ on the circuit board 44 is shown terminated in a lens 142 for projecting light forwardly along the central bore of the soldering instrument whereby a beam of light normally illuminates the work point for the operator and shows him where the hot gas will impinge upon the work piece. This feature may be understood by considering the basic hot gas nozzle tip arrangement of FIGURE 5 since in the alternative arrangement of FIGURE 6, the central bore is optically blocked by a solid tip 144 which is held in place by a retainer nut 146 threaded onto the outer of the threads 108 of the metal sheath 102. An inwardly extending retaining shoulder 148 of the nut 146 engages an outwardly extending shoulder 150 on the body of the tip 144. The nut 146 is turned onto the threads 108 until the base end of the tip is compressed tightly against a fixed collar 152 on an elongated gas circulator tube 154 which extends well into the heater portion of the ceramic tube 104 and forwardly concentrically into an oversized central bore 156 in the tip 144. The bore extends axially forwardly of the end of the circulator tube whereby the hot gas flowing through the long, central bore 155 of the circulator tube 154 passes out of its forward end and impinges upon the forward bottom of the bore 156 of the tip 144 and returns along the annular gap 158 between the tube 154 and the bore 156 and exhausts through radially directed ports 160. It may be noted that the forward inner surface 147 of the nut 146 is conically shaped for turning the exhausted gas forwardly toward the work point. This feature not only provides a means for blowing overly noxious fumes from the work area but may, when desired, be used to preheat gently the general area of the work point.

In this form of the invention, the tip functions much as a conventional soldering tip but with the advantage that it heats very quickly since the heat is carried by fast flowing hot gas and not by conduction through a high inertia metal path. Accordingly, the tip materials can be of iron instead of copper and iron plated copper thus avoiding the highly undesireable plating process and its expense as well as the weight and corrosion vulnerability of copper. It should be noted that gas heated tips according to this invention may be considerably thinner walled than implied by the geometry of the tip 144 as illustrated.

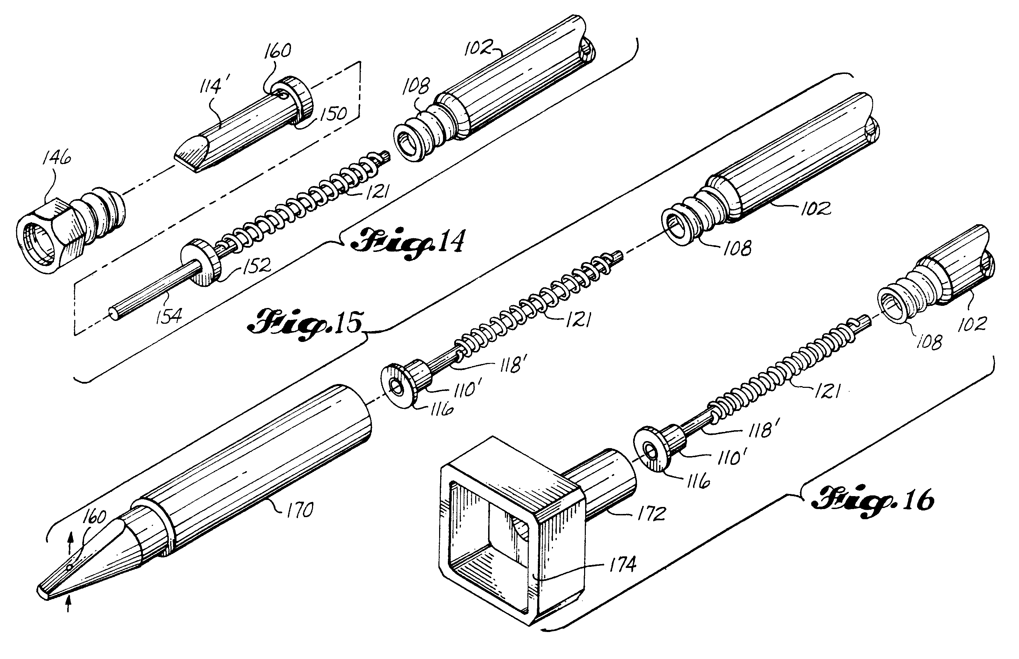

FIGURE 7 is an enlarged cross section view taken through the tip 144 showing its solid iron body, the circulator tube 154, the central gas flow path of the bore 155, and the return path of the annular gap 158 between the tip and the inner tube.

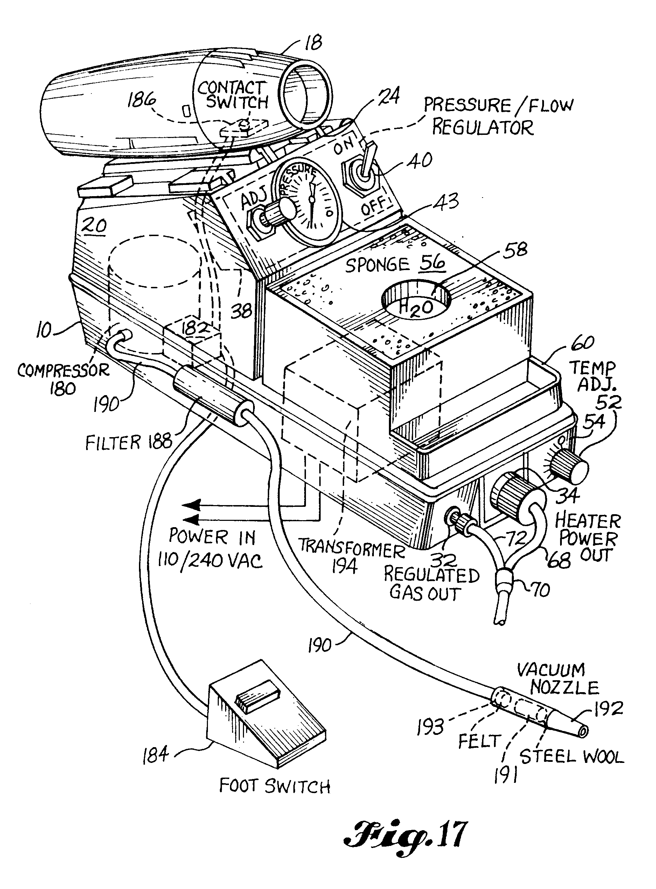

FIGURE 8 is similar view taken further rearwardly and showing the exhaust bores 160 and the gas directing conical forward surface 147 of the retainer nut 146.

FIGURE 9 is a cross sectional view taken further rearwardly and shows the ceramic heater tube 104 with its deposited heater element 122 and wrapped by the flat metal tape 124 heat exchange enhancer. Concentrically disposed within the ceramic heater tube is the gas circulator tube 154 similarly wrapped by the spring-like 121 heat exchange enhancer. This view illustrates the three concentric, in-cascade hot gas flow paths: the annular gap 125 over the tape 124 and between the outer metal sheath 102, the annular gap 129 over the spring 121 and between the ceramic tube 104 and the inner tube 154, and finally the inner bore 155 thereof.

Referring to FIGURE 10, the essentially concentric geometry of the handle portion of the soldering instrument 12 is shown to include the outer handle portion 36 circumscribed by the skirt portion 86 of the finger guard 78. The locking tabs 96 and slots 98 thereof are shown in elevation and dashed lines, respectively. The angular locking tabs 92 and notches 94 of the plug body 82 and handle portion 36, respectively, are also illustrated in this view. Immediately radially inwardly of the plug body 82 is shown the metal sheath 102 just forwardly of its flared rear end 136. This view also shows its grounding lug 103 extending rearwardly from the metal sheath 102. In turn, within the metal sheath is disposed the ceramic tube 104 and the fiber optic lead 66.

The similar view of FIGURE 11 taken just rearwardly of the previous figure shows again the outer skirt portion 86 of the finger guard 78, the handle portion 36 and the locking tabs 96 and slots 98 thereof, the rear portion of plug body 82 filled with the silastic potting material 134, the rear portion of the ceramic heater tube 104, and the inner fiber optic lead 66.

In FIGURES 12, 13, 14, 15, and 16, a series of alternative hot gas soldering tips and their respective circulator tubes are shown.

The combination of FIGURE 12 is essentially like that shown in FIGURE 5 except that the retainer bushing 110′ is fabricated integrally with the circulator tube 118′ and is not threaded. The bushing 110′ - tube 118' and heat exchange enhancer spring 121 are retained within the end of the sleeve 102 by screwing the threaded nozzle tip 120 onto the threads 108 of the forward end of the sleeve 102.

In FIGURE 13, two examples are shown which are similar to that of FIGURE 6 except that the elongated gas circulator tube 154 is used to direct a well defined stream of hot gas directly onto the work point instead of to heat the rear, inner surface of a tip 144; that is, the tip 144 is simply removed from behind the retainer nut 146 so that the forward end of the circulator tube 154 may direct the hot gas directly to the work point. The other example of FIGURE 13 combines the circulator tube 118′ of the structure shown in FIGURE 12 with a finer, smaller diameter forward extension tube 164 having a central retaining collar 165 and the rear portion 166 of which fits within the circulator tube 118′ and forward portion 168 of which extends beyond the retainer nut 146 for use when a particularly fine and precise jet of soldering gas is desired.

In FIGURE 14, the example shown is essentially like that of FIGURE 6 shown in an exploded form without the retainer bushing 110, for simplicity, and with a spade, or chisel shaped tip 114′.

Referring to FIGURE 15, the forward end structure of FIGURE 12 is repeated except that the threaded nozzle tip 120 is shown replaced by a heavy duty, internally threaded tip 170.

FIGURE 16 illustrates the same structure again except that the special, internally threaded tip 172 in this case is in the form of a rectangular oven over the peripheral edges 174 of which the hot gas flows when placed closely over a surface mounted circuit board device. With such a tip all the soldering terminals of such a surface mounted device may be melted at one time for ease of soldering or desoldering it with respect to the circuit board.

Referring to FIGURE 17, the basic structure shown in FIGURE 1 is illustrated showing, however, a number of additional or alternative features of a hot gas soldering system which may be considered to be essentially self contained. To this end a compact electric compressor 180 is mounted within the base housing 20 with its associated control unit 182. The compressor may be controlled with respect to its on or off modes by the toggle switch 40, by a foot switch 184, or by a contact switch 186 which is activated by withdrawal of the soldering unit 12 from its holder 18. Either of the latter type of controls may be used on a "momentary contact" basis whereby the compressor operates and supplies air flow only when actually desired thus minimizing power consumption, wear on the compressor's mechanical parts, and noise in the environment of the tool. Further in the latter regard a filter-muffler unit 188 may be carried by the housing 20 further to quiet the operation of the compressor.

Utilizing the input to the compressor as a vacuum source is a major feature of this example of the invention. A vacuum hose 190 terminated in a vacuum nozzle 192 may be used for noxious soldering fumes removal at the workpiece and/or for desoldering when desired. For utilization in such mode, the nozzle 192 preferably contains a removeable filter system consisting of a steel wool cartridge 191 for collection of course pieces of solder and a felt disc 193 for collecting smaller bits of solder and solidified resin and the like.

The base housing 20 may also carry a transformer 194 to convert high voltage line power to, for example, 12 or 24 volts for energizing the compressor, the heater, the fiber optics, and all control functions.

## Claims

1. Hot gas soldering apparatus comprising a base housing body (10); electric power supply means carried therein for energizing a soldering gas heater; electronically remote control temperature control circuit carried by said housing body; gas supply flow control means (42) carried by said housing body; soldering tool holding means (18) carried by said housing body; a hot gas soldering tool (12) having a handle portion (36), an electric heating element (122) carried by said handle portion and coupled to said electric power supply and said temperature control circuit, gas heating means connected to said heating element (122) for transferring heat from said heating element (122) to said gas, and soldering gas jet forming means (160) coupled to said gas heating means for causing the heated gas to impinge upon and heat a predetermined soldering point, and combination hose and electric conductor means (16) connecting said housing body and said handle portion, the conductors (62,64,66) being disposed within said hose, and said hose also constituting a carrier of said gas from said housing body to said hot gas soldering tool, characterised in that said hot gas soldering tool further includes a hollow metal tubular sheath (102) carried by said handle portion (36) and extending forwardly therefrom, a hollow ceramic cylindrical heating element support tube (104) upon the outer surface of the forward end of which is disposed said electric heating element (122), said heating element support tube being carried within and radially spaced from said metal tubular sheath to form a first heating chamber component of said gas heating means, an inner gas circulator tube (118) carried by the forward end of said metal tubular sheath and extending rearwardly therefrom for approximately the length of said electric heating element and being disposed within and radially spaced from said hollow ceramic support tube (104) to form thereby a second heating chamber component of said gas heating means, and gas flow means connecting to the interior of said handle portion for carrying gas from said combination hose means, through the interior of said handle portion, forwardly along the length of said first heating chamber, radially inwardly over the forward end of said ceramic heating element support tube, rearwardly along the length of said second heating chamber, radially inwardly over the rear end of said circulator tube, and forwardly toward a soldering work point.

2. Apparatus as claimed in Claim 1, characterized in that said temperature control circuit is of the character to time share the use of said electric conductors means whereby they ore periodically used to measure the electric resistance of said heating element by which said circuit determines its temperature and instantaneously adjusts the electric power flow thereto for maintaining it within a pre-determined range.

3. Apparatus as claimed in Claim 1, characterised in that said gas supply flow control means includes operator adjustable means (42) for selecting the quantity of gas flow to said hot gas soldering tool.

4. Apparatus as claimed in Claim 1, characterised in that said gas supply flow control means includes an electrically energized air compressor.

5. Apparatus as claimed in Claim 1, characterized by visual light generating means (142) carried by said housing body and a fiber optic lead (66) coupled thereto and extending to said hot gas soldering tool along and within the length of said combination hose and electric conductors means for providing illumination of a soldering work point.

6. Apparatus as claimed in Claim 1, characterised in that said gas heating means includes a spiral filamentary body (124) wrapped about said ceramic support tube (104) along the length of said first heating chamber for increasing the heat exchange between said heating element and the gas.

7. Apparatus as claimed in Claim 6, characterised in that said gas heating means includes a spiral filamentary body (121) wrapped about said collector tube along the length of said second heating chamber for increasing the heat exchange between said heating element and the gas.

8. Apparatus as claimed in Claim 1, characterised by a soldering tip (144) carried by the forward end of said tubular metal sheath, said soldering tip having a hollow interior open to its rear to receive the gas flow from said circulator tube, closed across its front, soldering surface end for impingement of the gas flow thereon, and having gas exhaust ports (160) rearwardly of said front, soldering surface end for releasing the spent gas to the environment of said tool.

9. Apparatus as claimed in Claim 4, characterised in that said air compressor includes an inlet, vacuum port and in which said hot gas soldering system further includes a vacuum nozzle containing removeable filter, and a vacuum hose connecting said vacuum nozzle to vacuum port for removal of noxious soldering fumes and/or molten solder from the work piece.

## Patentansprüche

1. Heißgaslötgerät, umfassend einen Grundgehäusekörper (10); elektrische Stromversorgungseinrichtungen, die in ihm angebracht sind, zur Stromversorgung eines Lötgasheizers; eine elektronisch ferngesteuerte Temperaturregelschaltung, die von dem Gehäusekörper getragen wird; Gasversorgungsdurchflußregeleinrichtungen (42), die von dem Gehäusekörper getragen werden; Lötwerkzeug-Halteeinrichtungen (18), die von dem Gehäusekörper getragen werden; ein Heißgaslötwerkzeug (12) mit einem Handgriffabschnitt (36), einem elektrischen Heizelement (122), das von dem Handgriffabschnitt getragen wird und mit der elektrischen Stromversorgung und der Temperaturregelschaltung verbunden ist, Gasheizeinrichtungen, die mit dem besagten Heizelement (122) verbunden sind, zum Übertragen von Wärme von dem Heizelement (122) an das Gas und Lötgasstrahlformungseinrichtungen (160), die mit den Gasheizeinrichtungen verbunden sind, zum Bewirken, daß das erhitzte Gas auftrifft und einen vorherbestimmten Lötpunkt erhitzt, und eine kombinierte Schlauch- und elektrische Leitungseinrichtung (16), die den Gehäusekörper und den Handgriffabschnitt miteinander verbindet, wobei die Leitungen (62,64,66) innerhalb des Schlauches angeordnet sind und der Schlauch auch einen Träger für das Gas von dem Gehäusekörper zu dem Heißgaslötwerkzeug bildet, dadurch gekennzeichnet, daß das Heißgaslötwerkzeug weiterhin einen hohlen rohrförmigen Metallmantel (102), der von dem Handgriffabschnitt (36) getragen wird und sich von diesem nach vorn erstreckt, ein hohles zylindrisches keramisches Heizelementhalterungsrohr (104), auf dessen äußerer Oberfläche seines vorderen Endes das elektrische Heizelement (122) angebracht ist, wobei dieses Heizelementhalterungsrohr innerhalb des rohrförmigen Metallmantels gehaltert ist und von diesem radial beabstandet ist, um einen ersten Heizkammerbestandteil von den Gasheizeinrichtungen zu bilden, ein inneres Gaszirkulationsrohr (118), das von dem vorderen Ende des rohrförmigen Metallmantels getragen wird und sich von diesem um näherungsweise die Länge des elektrischen Heizelementes nach hinten erstreckt und innerhalb des und radial beabstandet von dem hohlen keramischen Halterungsrohr (104) angeordnet ist, um dadurch einen zweiten Heizkammerbestandteil der Gasheizeinrichtungen zu bilden, und Gasdurchflußeinrichtungen umfaßt, die mit dem Inneren des Handgriffabschnitts verbunden sind, um Gas von der kombinierten Schlaucheinrichtung durch das Innere des Handgriffabschnitts nach vorn entlang der Länge der ersten Heizkammer, radial nach innen über das vordere Ende des keramischen Heizelementhalterungsrohres, zurück nach hinten entlang der Länge der zweiten Heizkammer, radial nach innen über das hintere Ende des Zirkulationsrohres und nach vorn in Richtung auf einen Lötarbeitspunkt zu führen.

2. Gerät nach Anspruch 1, dadurch gekennzeichnet, daß die Temperaturregelschaltung von einer solchen Art ist, daß sie die Verwendung der elektrischen Leitungseinrichtungen zeitteilt, wodurch sie periodisch benutzt werden, um den elektrischen Widerstand des Heizelementes zu messen, wodurch die Schaltung seine Temperatur bestimmt und sofort den hindurchgehenden elektrischen Stromfluß einstellt, um ihn innerhalb eines vorherbestimmten Bereichs zu halten.

3. Gerät nach Anspruch 1, dadurch gekennzeichnet, daß die Gasversorgungsdurchflußregeleinrichtung eine von einem Operator einstellbare Einrichtung (42) zum Wählen der Gasdurchflußmenge zu dem Heißgaslötwerkzeug umfaßt.

4. Gerät nach Anspruch 1, dadurch gekennzeichnet, daß die Gasversorgungsdurchflußregeleinrichtung einen elektrisch betriebenen Luftkompressor umfaßt.

5. Gerät nach Anspruch 1, gekennzeichnet durch visuelle Lichterzeugungseinrichtungen (142), die an dem Gehäusekörper getragen werden, und eine Lichtfaserleitung (66), die damit verbunden ist und sich zu dem Heißgaslötwerkzeug entlang und innerhalb der Länge der kombinierten Schlauch- und elektrischen Leitungseinrichtung erstreckt, um Beleuchtung eines Lötarbeitspunktes zu liefern.

6. Gerät nach Anspruch 1, dadurch gekennzeichnet, daß die Gasheizeinrichtung einen spiralförmigen fadenförmigen Körper (124) umfaßt, der um das keramische Halterungsrohr (104) entlang der Länge der ersten Heizkammer gewickelt ist, zum Erhöhen des Wärmeaustausches zwischen dem Heizelement und dem Gas.

7. Gerät nach Anspruch 6, dadurch gekennzeichnet, daß die Gasheizeinrichtung einen spiralförmigen fadenförmigen Körper (121) umfaßt, der um das Sammelrohr entlang der Länge der zweiten Heizkammer gewickelt ist, um den Wärmeaustausch zwischen dem Heizelement und dem Gas zu erhöhen.

8. Gerät nach Anspruch 1, gekennzeichnet durch eine Lötspitze (144), die von dem vorderen Ende des rohrförmigen Metallmantels getragen wird, wobei diese Lötspitze ein hohles Inneres aufweist, das zu ihrer Rückseite offen ist, um den Gasstrom von dem Zirkulationsrohr aufzunehmen, und quer über ihr vorderes Lötoberflächenende geschlossen ist, um den Gasfluß auf ihm auftreffen zu lassen, und Gasabsaugöffnungen (160) rückwärts gelegen von dem vorderen Lötoberflächenende zum Freisetzen des verbrauchten Gases an die Umgebung des Werkzeugs aufweist.

9. Gerät nach Anspruch 4, dadurch gekennzeichnet, daß der Luftkompressor eine Einlaß-Vakuumöffnung umfaßt und daß das Heißgaslötsystem weiterhin eine Vakuumdüse umfaßt, die ein entfernbares Filter enthält, und einen Vakuumschlauch, der diese Vakuumdüse mit der Vakuumöffnung verbindet, zum Entfernen von giftigen Lötdämpfen und/oder geschmolzenem Lot von dem Werkstück umfaßt.

## Revendications

1. Appareil de soudage à gaz chaud comprenant un corps de boîtier de base (10), des moyens d'alimentation en énergie électrique logés à l'intérieur de ce corps afin d'alimenter un appareil de chauffage de gaz de soudage, un circuit de commande de température, commandé électroniquement à distance, porté par le corps de boîtier, un moyen (42) de commande du flux d'alimentation en gaz porté par le corps de boîtier, un moyen (18) de maintien d'un outil de soudage, porté par le corps de boîtier, un outil de soudage à gaz chaud (12) comportant un manche (36), un élément de chauffage électrique (122) porté par ce manche et couplé aux moyens d'alimentation en énergie électrique et au circuit de commande de température, un moyen de chauffage du gaz relié à l'élément de chauffage (122) afin de transférer vers le gaz la chaleur provenant de l'élément de chauffage (122), et un moyen (160) de formation d'un jet de gaz de soudage, couplé au moyen de chauffage du gaz afin d'amener le gaz chauffé à venir frapper un point de soudage prédéterminé et à le chauffer, et un moyen (16) comprenant en combinaison un tuyau et des conducteurs électriques, reliant le corps de boîtier et le manche de l'outil, les conducteurs (62,64,66) étant logés dans le tuyau, ce tuyau constituant également un conduit de transport du gaz du corps de boîtier vers l'outil de soudage à gaz chaud, caractérisé en ce que l'outil de soudage à gaz chaud comporte en outre une gaine tubulaire métallique creuse (102) portée par le manche (36) et s'étendant vers l'avant à partir de celui-ci, un tube cylindrique en céramique (104), formant support de l'élément de chauffage, sur la surface externe de la partie extrême antérieure duquel est disposé l'élément de chauffage (122), ce tube formant support de l'élément de chauffage étant porté à l'intérieur de la gaine tubulaire métallique, en en étant espacé radialement, de manière à former un premier composant à chambre de chauffage des moyens de chauffage du gaz, un tube interne (118) pour la circulation du gaz, porté par la partie extrême antérieure de la gaine tubulaire métallique, s'étendant vers l'arrière de celle-ci approximativement sur la longueur de l'élément de chauffage électrique et étant disposé dans le tube support en céramique (104), en en étant espacé radialement, de manière à former un second composant à chambre de chauffage des moyens de chauffage du gaz, et des moyens d'écoulement du gaz reliés à l'intérieur du manche pour transporter le gaz à tuyau combiné, à travers l'intérieur du manche, vers l'avant le long de la première chambre de chauffage, puis radialement vers l'intérieur sur l'extrémité antérieure du tube en céramique formant support de l'élément de chauffage, puis vers l'arrière suivant la longueur de la seconde chambre de chauffage, puis radialement vers l'intérieur sur l'extrémité arriére du tube de circulation du gaz, et enfin vers l'avant en direction d'un point de travail où doit s'effectuer le soudage.

2. Appareil suivant la revendication 1 caractérisé en ce que le circuit de commande de température est du type à partage dans le temps de l'utilisation des conducteurs électriques, si bien que ces conducteurs sont utilisés périodiquement pour mesurer la résistance électrique de l'élément de chauffage, à partir de quoi le circuit détermine sa température et ajuste instantanément l'alimentation électrique de cet élément de chauffage pour maintenir la température dans une plage prédéterminée.

3. Appareil suivant la revendication 1 caractérisé en ce que le moyen de commande du flux d'alimentation en gaz comporte un moyen (42) réglable par un opérateur afin de sélectionner la grandeur du débit de gaz s'écoulant vers l'outil de soudage à gaz chaud.

4. Appareil suivant la revendication 1 caractérisé en ce que le moyen de commande du flux d'alimentation en gaz comporte un compresseur d'air alimenté électriquement.

5. Appareil suivant la revendication 1 caractérisé en ce qu'il comporte un moyen de producation d'une humière visuelle (142) porté par le corps de boîtier et un conducteur à fibre optique (66) couplé à ce moyen et s'étendant jusqu'à l'outil de soudage à gaz chaud, le long du moyen combiné comportant le tuyau et les conducteurs électriques et à l'intérieur de ce moyen, afin d'assurer l'éclairage du point de travail où à lieu le soudage.

6. Appareil suivant la revendication 1 caractérisé en ce que le moyen de chauffage du gaz comporte un corps filamentaire hélicoîdal (124) enroulé autour du tube support en céramique (104), sur la longueur de la première chambre de chauffage, afin d'accroître l'échange thermique entre l'élément de chauffage et le gaz.

7. Appareil suivant la revendication 6 caractérisé en ce que le moyen de chauffage du gaz comporte un corps filamentaire hélicoîdal (121) enroulé autour du tube de circulation du gaz, suivant la longueur de la seconde chambre de chauffage, afin d'accroître l'échange thermique entre l'élément de chauffage et le gaz.

8. Appareil suivant la revendication 1 caractérisé en ce qu'il comporte une pointe de soudage (144) portée par l'extrémité antérieure de la gaine métallique tubulaire, cette pointe de soudage ayant un intérieur creux ouvert vers l'arrière afin de recevoir le flux de gaz en provenance du tube de circulation, fermée en travers de son extrémité avant formant surface de soudage, afin de projeter le flux de gaz sur cette extrémité, et présentant des orifices (160) d'échappement du gaz, en arrière de cette extrémité avant formant surface de soudage, afin de décharger le gaz fourni vers l'environment de l'outil.

9. Appareil suivant la revendication 4 caractérisé en ce que le compresseur d'air comporte un orifice d'entrée en dépression et en ce que le système de soudage à gaz chaud comporte en outre une buse à dépression contenant un filtre amovible et un tuyau sous vide reliant cette buse à dépression à l'orifice en dépression, afin d'extraire, à partir de la pièce soumise au soudage, des fumées de soudage nuisibles et/ou de la soudure fondue.
